# EUROPÄISCHE PATENTSCHRIFT

(11) **EP 2 864 018 B1**
(45) Veröffentlichungstag und Bekanntmachung des Hinweises auf die Patenterteilung: **30.03.2016**
(21) Anmeldenummer: 13737161.3
(22) Anmeldetag: 18.06.2013
(51) Int. Cl.: B01D 36/00, B01D 29/52, B01D 29/88, D21H 23/00

(54) **BYPASS FILTRATION**
BYPASS FILTRATION
FILTRATION EN DÉRIVATION

(30) Priorität: 20.06.2012 DE 102012012302
(43) Veröffentlichungstag der Anmeldung: 29.04.2015
(73) Patentinhaber: BVG Bauer Verfahrenstechnik GmbH, 89626 Greifenberg (DE)
(72) Erfinder: BAUER, Joachim, 86926 Greifenberg/Ammersee (DE)
(74) Vertreter: Wittmann, Ernst-Ulrich
(86) Internationale Anmeldenummer: PCT/EP2013/062615
(87) Internationale Veröffentlichungsnummer: WO 2013/189926

(56) Entgegenhaltungen:
- EP-A1- 2 096 209
- DE-A1- 4 242 338
- US-A- 3 309 438

## Beschreibung

Die vorliegende Erfindung betrifft eine Vorrichtung und ein Verfahren zur Trennung von Stoffsystemen, insbesondere von Stoffsystemen wie sie in der Papier- und Kartonindustrie verwendet werden.

In einem Maschinenkreislauf von Leim- und Filmpressen, wie sie in der Papier- und Kartonindustrie verwendet werden ist es erforderlich, die Stärkeflotte oder die Streichfarbe zu filtrieren, um Verunreinigungen vor dem Auftrag auf das Papier zurückzuhalten.

Verfahren zur Trennung von Stoffsystemen in der Papier- und Kartonindustrie sind im Stand der Technik bekannt. So offenbart die EP 2 096 209 A1 eine Streichstation mit einem Maschinenkreislauf. Dabei führt ein Rücklauf nach der Auftragskammer das Rejekt zu einem Behälter. Der Zulauf vom Behälter zur Auftragskammer weist einen Filter auf.

Die US 3,309,438 A offenbart ein Verfahren zur Steuerung des Auftragens einer , mineralischen Beschichtung auf Papier. Auch hier wird das Rejekt in einen Tank eingebracht und im Zulauf zur Auftragsstation die Verunreinigungen über einen Filter (coating applicator) zurückgehalten.

Die DE 42 42 338 A1 offenbart ein Verfahren zur Verbesserung der Faserrückgewinnung aus dem Siebwasser einer Papiermaschine. Dazu wird das Rejekt in einen Mischbehälter eingebracht und über eine Fraktionierungsvorrichtung in feineres und gröberes Fasermaterial fraktioniert. Die gröbere Fraktion wird als Hilfsmassse in das Siebwasser geführt.

Verunreinigungen können mit der Stärkeflotte oder der Streichfarbe mitgeführt werden und bilden sich auch durch Auswaschungen aus dem Papier. Verunreinigungen sind zum Beispiele Fasern, Pigmente, Stickies, Chemikalienagglomerate.

Um eine Leim- oder Filmpresse zu versorgen, wird das aufzutragende Stoffsystem im Überschuss gefördert. Bei Leimpressen ist das die dreifache Menge, die auf das Papier aufgetragen wird und bei Filmpressen ist es bis zur 10 fachen Menge. Auf diese Weise entsteht ein Kreislauf.

Im Vorlauf sind allgemein Druckfilter eingebaut die verhindern, dass die Verunreinigungen auf das Auftragsaggregat gelangen. Im Rücklauf werden Vibrationssiebe oder ebenfalls Druckfilter eingesetzt. Die Druckfilter sind vorzugsweise mit einer Selbstreinigung der Filterfläche ausgestattet.

Das Rejekt wird beispielsweise im Stand der Technik beim Rüttelsieb ständig oberhalb des Filtermediums ausgetragen. Die Druckfilter sind auf der Rejektseite mit sogenannten "Rejektomaten" (gesteuerte Klappe mit oder ohne Kammer) ausgestattet, die öffnen, wenn die Druckdifferenz im Filter ansteigt. Mit dem kurzzeitigen Öffnen der Klappe kann dann beispielsweise das Rejekt aus dem Bereich des Filters entfernt werden.

Hierbei ist jedoch bekannt, dass Vibrationssiebe mehrere Nachteile aufweisen. So ist die Druckdifferenz am Filtermedium sehr gering wodurch die Gefahr besteht, dass das Filtermedium verstopft und das Rüttelsieb überläuft. Ferner ist das Rüttelsieb ein offenes System mit großer Oberfläche. Dadurch besteht die Gefahr, dass sich Agglomerate bilden (z.B. angetrocknete Stärke), die das Filtermedium ebenfalls zusetzen können. Darüber hinaus wird das Rejekt ständig oberhalb des Filtermediums ausgetragen, was zu Verlusten an Stärkeflotte und Streichfarbe führt. Schließlich ist das Vibrationssieb infolge der systembedingten Vibrationen einem großen Verschleiß ausgesetzt.

Aber auch Druckfilter haben Nachteile. So sind Druckfilter, welche im Vorlauf eingesetzt werden meist selbstabreinigende Druckfilter, welche in der Regel mit einer Rejektschleuse ausgestattet sind. Die Rejektschleuse öffnet, wenn der Druck im Filter über einen Sollwert ansteigt. Der Druckanstieg ergibt sich durch zunehmenden Rejektanfall. Der Druck im Filter baut sich wieder ab, wenn das Rejekt aus dem Filter ausgetragen wird. Damit schwankt der Druck im Filter, was sich auf den Durchfluss zum Auftragsaggregat negativ auswirkt. Bei Druckfilter welche im Rücklauf eingebaut sind ist die Druckdifferenz am Filtermedium sehr gering, da nur der hydrostatische Druck im Rücklauf zur Verfügung steht. Dadurch besteht jedoch wie beim Rüttelsieb die Gefahr der Verstopfung.

Ausgehend von dieser Problemstellung ist es Aufgabe der vorliegenden Erfindung, die im Stand der Technik bekannten Probleme und Nachteile wenigstens teilweise zu lösen.

Die vorliegende Aufgabe wird durch die erfindungsgemäße Vorrichtung entsprechend Anspruch 1 und das erfindungsgemäße Verfahren zur Trennung von fließfähigen Stoffsystemen gemäß Anspruch 12 gelöst. Bevorzugte Ausführungsformen der vorliegenden Erfindung sind Gegenstand der jeweiligen Unteransprüche.

Die erfindungsgemäße Vorrichtung zur Trennung eines fließfähigen Stoffsystems in einen Gutstoff und ein Rejekt umfasst wenigstens einen Hauptkreislauf und mindestens einen Nebenkreislauf. Der Hauptkreislauf weist dabei ein Rohrleitungssystem auf, welches das Stoffsystem zu einem Verbraucher führt und umfasst daneben wenigstens einen Arbeitsbehälter, einen ersten Filter, den Verbraucher für das Stoffsystem und eine Rückführung, für das im Überschuss an den Verbraucher herangeführte Stoffsystem. Die Rückführung führt das Stoffsystem wieder zum Arbeitsbehälter zurück. Die Erfindung weist ferner ein weiteres Rohrsystem zur Rückführung des Rejekts des ersten Filters in den Arbeitsbehälter auf. Der Nebenkreislauf umfasst erfindungsgemäß eine Entnahmestelle für das Stoffsystem aus dem Arbeitsbehälter und einen zweiten Filter, dessen Gutstoff wieder in den Arbeitsbehälter zurückgeführt wird und dessen Rejekt ausgeschleust, vorzugsweise verworfen wird.

Die Filter sind gemäß der vorliegenden Erfindung vorzugsweise Druckfilter, die insbesondere selbstreinigend oder selbstabreinigend ausgeführt sind. Ferner weisen die Filter als Trennkriterium Bauelemente wie zum Beispiel Siebe insbesondere Loch- oder Schlitzsiebe, Papierfilter, Glasfaservliese, Keramik, Membranen, Gewebe, poröse Festkörper wie zum Beispiel Sintermetall, Schüttungen, Vliese, Filze wie zum Beispiel Nadelfilze und Kombinationen hiervon auf.

Der erste Filter der Vorrichtung weist gemäß einer weiteren besonders bevorzugten Ausführungsform ein Trennkriterium auf, welches gleich groß oder größer ist als das Trennkriterium des zweiten Filters im Nebenkreislauf.

Darüber hinaus wird die Vorrichtung in der Art betrieben, dass das Rejekt des ersten und/oder zweiten Filters kontinuierlich abgezogen wird, wobei ferner gemäß einer weiteren besonders bevorzugten Ausführungsform über eine Rejektschleuse oder einen sog. Rejektomat zwischen 1 und 50 %, vorzugsweise zwischen 5 und 15% und insbesondere ca. 10 % der Gesamtdurchflussmenge des Stoffsystems abgezogen werden.

Über den Nebenkreislauf wird gemäß einer weiteren besonders bevorzugten Ausführungsform kontinuierlich eine vorgegebene Menge zwischen 0,1 bis 50 %, vorzugsweise 0,5 bis 5 % und insbesondere 1 bis 3 % der Gesamtdurchflussmenge des Stoffsystems, insbesondere der Stärkeflotte oder Streichfarbe des Hauptkreislaufes abgeleitet und dem zweiten Filter zugeführt.

Entsprechend der vorliegenden Erfindung werden als Verbraucher Aggregate verstanden, welche aus einer Gruppe ausgewählt werden, die Walzen-, Sumpf oder Düsenauftragswerke, insbesondere Streichaggregate, Leimpressen, Filmpressen, Vorhangstreichaggregate - alle insbesondere für den Einsatz bei der Papier- oder Kartonherstellung oder eine Papier- oder Kartonmaschine, Kombinationen hiervon und dergleichen umfasst. Die erfindungsgemäße Vorrichtung ist insbesondere in der Papier- und Kartonindustrie in den entsprechenden Maschinenkreisläufen solcher Anlagen integriert.

Als fließfähige Stoffsystem werden gemäß der vorliegenden Erfindung insbesondere Stärkeflotten, Streichfarben, wässrige Suspensionen, wässrige Dispersionen, Abwässer, Faserstoffsuspensionen, Kombinationen hiervon und dergleichen verstanden.

Unter Trennen wird gemäß der vorliegenden Erfindung ein Trennprozess verstanden, mit welchem Inhaltsstoffe eines Stoffsystems durch Nutzung unterschiedlicher physikalischer Eigenschaften voneinander getrennt werden. Solche Trennungen können beispielsweise aufgrund der Dichte, der Partikelgröße, der Partikelträgheit und/oder der Oberflächenbenetzbarkeit erfolgen. Durch diesen Trennprozess entstehen gemäß der vorliegenden Erfindung ein Gutstoff (Volumenstrom) und ein Rejekt (Volumenstrom), wobei die Inhaltsstoffe des Gutstoffs vorwiegend die gewünschten Eigenschaften und die Inhaltsstoffe des Rejekt vorwiegend die nicht gewünschten Eigenschaften des Stoffsystems aufweisen.

Gemäß einer weiteren besonders bevorzugten Ausgestaltung der vorliegenden Erfindung ist in der Rückführung des Stoffsystems vom Verbraucher ein weiterer Filter oder ein Trennaggregat vorgesehen. Dieses Trennaggregat ist aus einer Gruppe ausgewählt, welche Druckklassierer, Planklassierer, Cleaner, Siebe, Kegelschleudern, Eindicker wie Siebpressen oder Schneckenpressen aufweist.

Die Erfindung wird auch durch ein Verfahren gelöst, welches das Transportieren des Stoffsystems in einem Hauptkreislauf mit einem Arbeitsbehälter und einem Verbraucher, wobei das Stoffsystem mit einem ersten Filter des Hauptkreislaufes in einen Gutstoff und ein Rejekt getrennt wird, das Rückführen des Rejekts des ersten Filters in den Arbeitsbehälter, die Entnahme und Transport eines vorgegebenen Volumenstroms des Stoffsystems aus dem Arbeitsbehälter in einem Nebenkreislauf, das Trennen des Stoffsystems in einen Gutstoff und ein Rejekt des Nebenkreislaufs mit einem zweiten Filter und die Rückführung des Gutstoffes aus dem zweiten Filter in den Arbeitsbehälter und Ausschleusen bzw. Verwerfen des Rejekts aus dem zweiten Filter als Verfahrensschritte aufweist.

Dabei kann gemäß einer bevorzugten Ausführungsform vom ersten Filter kontinuierlich Rejekt abgezogen werden, wobei die Menge an Rejekt zwischen 1 und 50 %, vorzugsweise zwischen 5 und 15 % und insbesondere bei ca. 10 % der Gesamtdurchflussmenge des Stoffsystems liegt.

Ferner liegt es auch im Sinn der Erfindung, dass über den Nebenkreislauf dem Arbeitsbehälter kontinuierlich eine vorgegebene Menge zwischen 0,1 bis 50 %, vorzugsweise 0,5 bis 5 % und insbesondere 1 bis 3 % der Gesamtdurchflussmenge der Stärkeflotte oder Streichfarbe des Hauptkreislaufes abgeleitet und dem zweiten Filter zugeführt wird.

Gemäß einer weiteren besonders bevorzugten Ausführungsform der vorliegenden Erfindung kann die Durchsatzmenge im Nebenkreislauf von 1:1 bis zu 1/100 :1 im Vergleich zur Durchsatzmenge im Hauptstrom variiert werden.

Gemäß einer weiteren besonders bevorzugten Ausführungsform erfolgt die Zuführung des Stoffsystems, insbesondere des Gutstoffs aus dem ersten Filter zum Verbraucher im Überschuss, wobei der nicht verbrauchte Gutstoff zum Arbeitsbehälter zurückgeführt wird. Hierbei kann es des weiteren vorgesehen sein, dass dieser Rücklauf einer weiteren Filtration unterzogen wird.

Um insbesondere Lufteinschlüsse in das Stoffsystem zu reduzieren oder zu vermeiden, liegt es auch im Sinn der vorliegenden Erfindung, dass wenigstens die Trennung des fließfähigen Stoffsystems in einen Gutstoff und ein Rejekt unter Ausschluss von Luft erfolgt. Die kann natürlich aus dahingehend erweitert werden, dass insbesondere in der Vorbereitung des Stoffsystems für die Verarbeitung im Verbraucher unter Ausschluss von Luft (d.h. in einem im Wesentlichen geschlossenen System) gearbeitet wird.

Die Erfindung betrifft neben der Vorrichtung und dem Verfahren auch die Verwendung der Vorrichtung zur Filtration, Klassierung, Sortierung und/oder Abscheidung von fließfähigen Materialien, insbesondere von Stärkeflotte oder Streichfarbe und besonders bevorzugt zum Trennen von Materialien nach ihrer geometrischen Form, nach physikalischen Merkmalen und/oder nach Phasenunterschieden.

Entsprechend der vorliegenden Erfindung ist es von besonderem Vorteil, dass bei Verwendung eines geschlossenen Systems wenig oder keine Luft in das Stoffsystem hinzutritt, die zu zusätzlichen Agglomeraten führen kann.

Darüber hinaus ist es bei Einsatz der Erfindung von Vorteil, dass Filter im Bypass durch den Einsatz der zusätzlichen Förderpumpe mit einer hohen Druckdifferenz beaufschlagt werden können, wodurch die Filtration verbessert und eine Verstopfung des Filters verhindert werden kann. Ferner kann das Filter im Bypass mit sehr unterschiedlichen Durchsatzmengen beaufschlagt werden, wodurch die Reinigung des Kreislaufes in weiten Grenzen beeinflusst werden kann. Schließlich kann die Filtration ohne jeden Einfluss auf die Kreislaufsituation betrieben werden, da die Bypass-Filtration vom Maschinenkreislauf entkoppelt ist. Damit bleiben die Druckverhältnisse im Kreislauf konstant.

Weitere Aspekte der Erfindung, ergeben sich aus der nachfolgenden detaillierten Beschreibung einer möglichen Ausführungsform der Erfindung in Verbindung mit den Zeichnungen, sowie den Ansprüchen. Es wird darauf hingewiesen, dass durch dieses Beispiel Abwandlungen beziehungsweise Ergänzungen wie sie sich für den Fachmann unmittelbar ergeben mit umfasst sind. Darüber hinaus stellt das bevorzugte Ausführungsbeispiel keine Beschränkung der Erfindung dar, so dass auch Abwandlungen und Ergänzungen im Umfang der vorliegenden Erfindung liegen.

Dabei zeigen:
Fig. 1 und 2 jeweils ein Fließschema aus dem Stand der Technik zur Trennung von Stoffsystemen, wie sie in der Papier- und Kartonindustrie eingesetzt werden; und
Fig. 3 ein Fließschema für den Einsatz der erfindungsgemäßen Vorrichtung im Bereich der Aufbereitung von Stärkeflotten oder Streichfarbe.

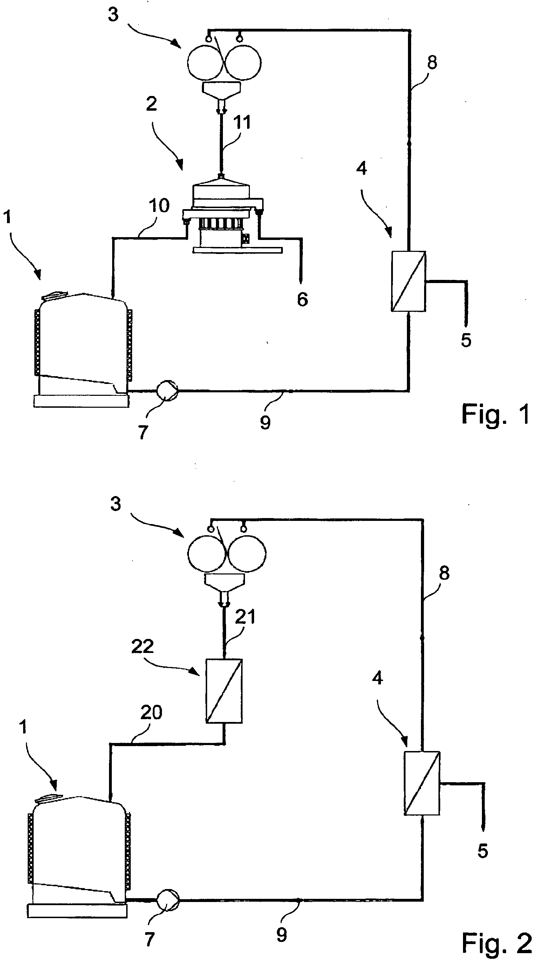

In den Figuren 1 und 2 ist jeweils ein Fließschema aus dem Stand der Technik dargestellt, bei welchem ein Stoffsystem aus dem Arbeitsbehälter 1 über die Pumpe 7 und die Leitung 9 zu einem Filter 4 geleitet wird. Der Gutstoff wird in der Leitung 8 zum Verbraucher 3 geführt, wobei der Überschuss des Stoffsystems über den Rücklauf 11, die Filtration 2 und hier über die Gutstoffleitung 10 dem Arbeitsbehälter 1 wieder zurück geführt wird. Das Rejekt wird sowohl bei dem Filter 2 über die Ableitung 6 und bei dem Filter 4 über die Ableitung 5 verworfen. Figur 2 modifiziert die Ausführungsform nach Figur 1 dahingehend, dass der Überschuss über die Rücklaufleitung 21 einem Filter 22 ohne Rejekt zugeführt wird und der Gutstoff über die Leitung 20 dem Arbeitsbehälter 1 zugeführt wird.

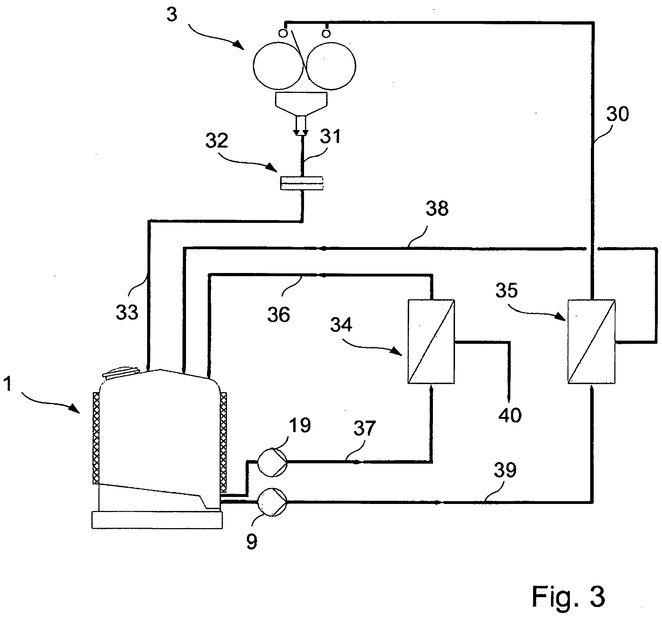

Entsprechend dem vorliegenden Ausführungsbeispiel der Erfindung (Fig. 3) wird im Vorlauf zum Verbraucher 3 - hier eine Leimpresse für den Einsatz in der Papier- und Kartonindustrie - ein selbstabreinigendes Druckfilter 35 eingesetzt und im Rücklauf 31 wird nur ein grobes Sieb 32 vorgesehen, aber kein Filter. Aus dem Druckfilter 35 wird kontinuierlich Rejekt über die Rücklaufleitung 38 abgezogen und zurück in den Arbeitsbehälter 1 gegeben. Die Rejektmenge kann eingestellt werden und beträgt beispielsweise ca. 10 % des Gesamtdurchflusses. Mit dem kontinuierlichen Abzug an Rejekt wird verhindert, dass sich das Filtermedium belegt und sich die Druckverhältnisse im Filter ändern. Durch die konstanten Druckverhältnisse bleibt der Durchfluss zum Auftragsaggregat relativ konstant, was sich positiv auf die Auftragsmenge auswirkt.

Die Verunreinigungen werden im Arbeitsbehälter 1 gesammelt und müssen dort ausgeschleust werden, um eine Anreicherung der Verunreinigungen im Arbeitsbehälter zu verhindern. Hierzu wird im Bypass 37 am Arbeitsbehälter ein selbstabreinigendes Druckfilter 34 so eingesetzt, dass mit einer Pumpe 19 ständig Stärkeflotte oder Streichfarbe in kleinerer Menge entzogen wird und durch das Druckfilter 34 gefördert wird. Das gefilterte Produkt gelangt über die Leitung 36 zurück in den Arbeitsbehälter 1.

Das Rejekt wird über einen "Rejektomaten" von Zeit zu Zeit aus dem Druckfilter 34 über die Leitung 40 ausgeschleust. Auf diese Weise werden ständig die Verunreinigungen im Arbeitsbehälter 1 über den Bypass 37 entsorgt. Dabei wird eine Anreicherung von Verunreinigungen verhindert und es stellt sich im Kreislaufsystem ein Gleichgewicht an Verunreinigungen ein.

In der Figur 3 sind ferner mit den Bezugszeichen 9 die Pumpe für den Hauptkreislauf mit der Zuleitung 39 zum Filter 35 und der Gutstoffleitung 30 zum Verbraucher 3 dargestellt. Das im Überschuss zugeführte Stoffsystem wird über die Leitungen 31, 33 und den Filter 32 zum Arbeitsbehälter zurückgeführt.

## Patentansprüche

1. Vorrichtung zur Trennung eines fließfähigen Stoffsystems in einen Gutstoff und ein Rejekt, mit einem Hauptkreislauf für die Zuführung des Stoffsystems zu einem Verbraucher (3) und einem Nebenkreislauf,
wobei der Hauptkreislauf einen Arbeitsbehälter (1), einen ersten Filter oder ein erstes Trennaggregat (35), welches aus einer Gruppe ausgewählt wird, welche Druckklassierer, Planklassierer, Cleaner, Siebe, Kegelschleudern, Eindicker wie Siebpressen oder Schneckenpressen aufweist, den anschließenden Verbraucher für das Stoffsystem (3) und eine Rückführung (31, 33) für das nicht verbrauchte Stoffsystem zum Arbeitsbehälter (1) aufweist,
**dadurch gekennzeichnet, dass**
das Rejekt des ersten Filters oder ersten Trennaggregats (35) in den Arbeitsbehälter (1) zurückgeführt wird und der Nebenkreislauf eine Entnahmestelle aus dem Arbeitsbehälter (1), einen zweiten Filter oder ein zweites Trennaggregat (34), welches aus einer Gruppe ausgewählt wird, welche Druckklassierer, Planklassierer, Cleaner, Siebe, Kegelschleudern, Eindicker wie Siebpressen oder Schneckenpressen aufweist und eine Rückführung (36) für den Gutstoff aus dem zweiten Filter oder zweiten Trennaggregat (34) in den Arbeitsbehälter aufweist und das Rejekt (40) aus dem zweiten (34) Filter oder zweiten Trennaggregat verworfen wird.

2. Vorrichtung gemäß Anspruch 1, **dadurch gekennzeichnet, dass**
der erste und/oder der zweite Filter (34, 35) Druckfilter, insbesondere selbstreinigende oder selbstabreinigende Druckfilter sind.

3. Vorrichtung gemäß einem der Ansprüche 1 oder 2, **dadurch gekennzeichnet, dass**
Trennkriterium im ersten und/oder zweiten Filter (34, 35) aus einer Gruppe ausgewählt wird, welche Siebe insbesondere Loch- oder Schlitzsiebe, Papierfilter, Glasfaservliese, Keramik, Membranen, Gewebe, poröse Festkörper wie zum Beispiel Sintermetall, Schüttungen, Vliese, Filze wie zum Beispiel Nadelfilze und Kombinationen hiervon aufweist.

4. Vorrichtung gemäß einem der vorstehenden Ansprüche, **dadurch gekennzeichnet, dass**
das Rejekt des zweiten Filters oder zweiten Trennaggregats (34) kontinuierlich oder diskontinuierlich ausschleusbar ist.

5. Vorrichtung gemäß einem der vorstehenden Ansprüche, **dadurch gekennzeichnet, dass**
der Verbraucher (3) aus einer Gruppe ausgewählt ist, welche Walzen-, Sumpf oder Düsenauftragswerke, insbesondere Streichaggregate, Leimpressen, Filmpressen, Vorhangstreichaggregate - alle insbesondere für den Einsatz bei der Papier- oder Kartonherstellung oder eine Papier- oder Kartonmaschine und Kombinationen hiervon umfasst.

6. Vorrichtung gemäß einem der vorstehenden Ansprüche, **dadurch gekennzeichnet, dass**
in der Rückführung (31, 33) des Stoffsystems vom Verbraucher (3) ein weiterer Filter und/oder Sieb (32) vorgesehen ist.

7. Verfahren zur Trennung eines fließfähigen Stoffsystems in einen Gutstoff und ein Rejekt mit den Schritten:
- Transportieren des Stoffsystems in einem Hauptkreislauf mit einem Arbeitsbehälter (1) und einem Verbraucher (3), wobei das Stoffsystem mit einem ersten Filter oder einem ersten Trennaggregat (35), welches aus einer Gruppe ausgewählt wird, welche Druckklassierer, Planklassierer, Cleaner, Siebe, Kegelschleudern, Eindicker wie Siebpressen oder Schneckenpressen aufweist, des Hauptkreislaufes vor dem Verbraucher (3) in einen Gutstoff und ein Rejekt getrennt wird;
- Rückführung des nicht verbrauchten Stoffsystems aus dem Verbraucher (3) in den Arbeitsbehälter (1);
- Rückführen des Rejekts (38) des ersten Filters oder ersten Trennaggregats (35) in den Arbeitsbehälter (1);
- Entnahme und Transport eines vorgegebenen Volumenstroms des Stoffsystems aus dem Arbeitsbehälter (1) in einem Nebenkreislauf;
- Trennen des Stoffsystems in einen Gutstoff und ein Rejekt des Nebenkreislaufs mit einem zweiten Filter oder zweiten Trennaggregat (34), welches aus einer Gruppe ausgewählt wird, welche Druckklassierer, Planklassierer, Cleaner, Siebe, Kegelschleudern, Eindicker wie Siebpressen oder Schneckenpressen aufweist;
- Rückführung (36) des Gutstoffes aus dem zweiten Filter oder zweiten Trennaggregat (34) in den Arbeitsbehälter (1) und Ausschleusen bzw. Verwerfen des Rejekts (40) aus dem zweiten Filter oder zweiten Trennaggregat (34).

8. Verfahren gemäß Anspruch 7, **dadurch gekennzeichnet, dass**
von dem ersten Filter oder ersten Trennaggregat (35) kontinuierlich Rejekt abgezogen wird und die Menge hiervon zwischen 1 und 50 %, vorzugsweise zwischen 5 und 15 % und insbesondere bei ca. 10 % einer Gesamtdurchflussmenge liegt.

9. Verfahren gemäß Anspruch 7 oder 8, **dadurch gekennzeichnet, dass**
über den Nebenkreislauf dem Arbeitsbehälter (1) kontinuierlich eine vorgegebene Menge zwischen 0,1 bis 50 %, vorzugsweise 0,5 bis 5 % und insbesondere 1 bis 3 % einer Gesamtdurchflussmenge einer Stärkeflotte oder Streichfarbe des Hauptkreislaufes abgeleitet und dem zweiten Filter oder zweiten Trennaggregat (34) zugeführt wird.

10. Verfahren gemäß einem der Ansprüche 7 bis 9, **dadurch gekennzeichnet, dass**
die Zuführung des Gutstoffs zum Verbraucher (3) im Überschuss erfolgt und der Überschuss nicht verbrauchten Gutstoffs zum Arbeitsbehälter (1) zurückgeführt wird.

11. Verfahren gemäß Anspruch 10, **dadurch gekennzeichnet, dass**
der zurückgeführte Gutstoff vor der Einleitung in den Arbeitsbehälter (1) gereinigt, insbesondere filtriert bzw. gesiebt (32) wird.

12. Verfahren gemäß einem der Ansprüche 7 bis 11, **dadurch gekennzeichnet, dass**
die Trennung des fließfähigen Stoffsystems in einen Gutstoff und ein Rejekt unter Ausschluss von Luft erfolgt.

13. Verfahren gemäß einem der Ansprüche 7 bis 12, **dadurch gekennzeichnet, dass**
das fließfähige Stoffsystem aus einer Gruppe ausgewählt wird, welche Stärkeflotten, Streichfarben, wässrige Suspensionen, wässrige Dispersionen, Abwässer, Faserstoffsuspensionen, Kombinationen hieraus aufweist.

14. Vorrichtung gemäß einem der Ansprüche 1 bis 6 zur Durchführung eines Verfahrens gemäß einem der Ansprüche 7 bis 13.

15. Verwendung einer Vorrichtung gemäß einem der Ansprüche 1 bis 6 zur Filtration, Klassierung, Sortierung und/oder Abscheidung von fließfähigen Materialien, insbesondere von Stärkeflotte oder Streichfarbe und besonders bevorzugt zum Trennen von Materialien nach ihrer geometrischen Form, nach physikalischen Merkmalen und/oder nach Phasenunterschieden.

## Claims

1. A device for separating a flowable system of materials into an accepted material and a reject, said device having a main circuit for feeding the system of materials to a consumer (3) and having a secondary circuit,
wherein the main circuit includes a working vessel (1), a first filter or first separation unit (35) selected from a group comprising pressure classifiers, planar classifiers, cleaners, screens, conical centrifuges, thickeners such as wire presses or screw presses, the subsequent consumer for the system of materials (3), and a return (31,33) for the unused system of materials to the working vessel (1),
**characterized in that**
the reject of the first filter or first separation unit (35) is returned into the working vessel (1) and the secondary circuit includes a point of extraction from the working vessel (1), a second filter or second separation unit (34) selected from a group comprising pressure classifiers, planar classifiers, cleaners, screens, conical centrifuges, thickeners such as wire presses or screw presses, and includes a return (36) for the accepted material from the second filter or second separation unit (34) into the working vessel, and the reject (40) from the second (34) filter or second separation unit is discarded.

2. The device of claim 1, **characterized in that**
the first and/or the second filter (34, 35) are pressure filters, in particular self-cleaning or self-cleansing pressure filters.

3. The device of either of claims 1 or 2, **characterized in that**
a separation criterion in the first and/or second filter (34, 35) is selected from a group comprising screens, in particular perforated or slotted screens, paper filters, glass-fiber veils, ceramics, membranes, fabrics, porous solids such as sintered metal, bulk materials, fleeces, felts such as needled felts, and combinations thereof.

4. The device of any preceding claim, **characterized in that**
the reject of the second filter or second separation unit (34) can be discharged continuously or intermittently.

5. The device of any preceding claim, **characterized in that**
the consumer (3) is selected from a group comprising roll applicators, sump applicators or nozzle applicators, in particular coating units, size presses, film presses, curtain-type coating units-all in particular for use in papermaking or cardboard making, or a papermaking or cardboard making machine, and combinations thereof.

6. The device of any preceding claim, **characterized in that**
another filter and/or screen (32) is provided in the return (31,33) of the system of materials from the consumer (3).

7. A method for separating a flowable system of materials into an accepted material and a reject, the method comprising the steps of:
- conveying the system of materials in a main circuit having a working vessel (1) and a consumer (3), wherein the system of materials is separated into an accepted material and a reject using a first filter or first separation unit (35) selected from a group comprising pressure classifiers, planar classifiers, cleaners, screens, conical centrifuges, thickeners such as wire presses or screw presses, of the main circuit upstream from the consumer (3);
- returning the unused system of materials from the consumer (3) into the working vessel (1);
- returning the reject (38) of the first filter or first separation unit (35) into the working vessel (1);
- extracting and conveying a predetermined volumetric flow of the system of materials from the working vessel (1) in a secondary circuit;
- separating the system of materials into an accepted material and a reject of the secondary circuit using a second filter or second separation unit (34) selected from a group comprising pressure classifiers, planar classifiers, cleaners, screens, conical centrifuges, thickeners such as wire presses or screw presses;
- returning (36) the accepted material from the second filter or second separation unit (34) into the working vessel (1) and discharging or discarding the reject (40) from the second filter or second separation unit (34).

8. The method of claim 7, **characterized in that**
reject is continuously drawn from the first filter or first separation unit (35) and the amount thereof is between 1 and 50 %, preferably between 5 and 15 %, and in particular about 10 % of a total amount of flow.

9. The method of claim 7 or 8, **characterized in that**
through the secondary circuit, a predetermined amount of 0.1 to 50 %, preferably 0.5 to 5 % and in particular 1 to 3 %, of a total amount of flow of a size solution or coating material of the main circuit is continuously diverted from the working vessel (1) and fed to the second filter or second separation unit (34).

10. The method of any of claims 7 to 9, **characterized in that**
the accepted material is fed in excess to the consumer (3) and the excess of unused accepted material is returned to the working vessel (1).

11. The method of claim 10, **characterized in that**
the returned accepted material is purified, in particular filtered and/or screened (32), before being introduced into the working vessel (1).

12. The method of any of claims 7 to 11, **characterized in that** the separation of the flowable system of materials into an accented material and a reject

13. The method of any of claims 7 to 12, **characterized in that**
the flowable system of materials is selected from a group comprising size solutions, coating materials, aqueous suspensions, aqueous dispersions, effluent, fibrous suspensions, and combinations thereof.

14. The device of any of claims 1 to 6 for performing a method according to any of claims 7 to 13.

15. The use of a device of any of claims 1 to 6 for filtering, classifying, sorting and/or segregating flowable materials, in particular size solution or coating material, and particularly preferably for separating materials by their geometrical shape, by physical properties and/or by differences in phase.

## Revendications

1. Dispositif en vue du triage d'un système de matière à écoulement libre en une pâte acceptée et un rejet, avec un circuit principal pour l'introduction du système de matière vers un consommateur (3) et un circuit secondaire,
le circuit principal présentant un récipient de travail (1), un premier filtre ou un premier groupe de triage (35), qui est sélectionné à partir d'un groupe qui présente des classificateurs d'impression, des classificateurs de plan, des nettoyeurs, des tamis, des épurateurs tourbillonnaires, des épaississeurs ainsi que des extrudeuses à trou ou des boudineuses, le consommateur ultérieur pour le système de matière (3) et un retour (31, 33) pour le système de matière non consommé vers le récipient de travail (1),
**caractérisé en ce que**
le rejet du premier filtre ou du premier groupe de triage (35) est réintroduit dans le récipient de travail (1) et le circuit secondaire présente un point de prélèvement à partir du récipient de travail (1), un second filtre ou un second groupe de triage (34), qui est sélectionné à partir d'un groupe qui présente des classificateurs d'impression, des classificateurs de plan, des nettoyeurs, des tamis, des épurateurs tourbillonnaires, des épaississeurs ainsi que des extrudeuses à trou ou des boudineuses et un retour (36) pour la pâte acceptée provenant du second filtre ou du second groupe de triage (34) dans le récipient de travail et **en ce que** le rejet (40) provenant du second (34) filtre ou du second groupe de triage est rebuté.

2. Dispositif selon la revendication 1, **caractérisé en ce que**
le premier et/ou le second filtre (34, 35) sont des filtres d'impression, notamment des filtres d'impression autonettoyants ou dépoussiérants automatiquement.

3. Dispositif selon une quelconque des revendications 1 ou 2, **caractérisé en ce que**
le critère de triage dans le premier et/ou le second filtre (34, 35) est sélectionné à partir d'un groupe qui présente des tamis, notamment des tamis à trou ou à fente, des filtres à papier, des non-tissés en fibre de verre, de la céramique, des membranes, du tissu, des corps solides poreux, comme par exemple le métal fritté, les versements, les non-tissés, les feutres, comme par exemple les feutres aiguilletés et des combinaisons de ceux-ci.

4. Dispositif selon une quelconque des revendications précédentes, **caractérisé en ce que**
le rejet du second filtre ou du second groupe de triage (34) est évacuable de manière continue ou discontinue.

5. Dispositif selon une quelconque des revendications précédentes, **caractérisé en ce que**
le consommateur (3) est sélectionné à partir d'un groupe qui comporte des mécanismes d'application à cylindre, par décantation ou à buse, notamment des groupes de couchage, des presses encolleuses, des presses à film, des groupes de couchage à rideau - tous notamment pour l'emploi lors de la fabrication du papier ou du carton ou une machine à papier ou à carton - et des combinaisons de ceux-ci.

6. Dispositif selon une quelconque des revendications précédentes, **caractérisé en ce que**
dans le retour (31, 33) du système de matière du consommateur (3), un autre filtre et/ou tamis (32) est prévu.

7. Procédé en vue du triage d'un système de matière à écoulement libre en une pâte acceptée et un rejet avec les étapes de :
- transport du système de matière dans un circuit principal avec un récipient de travail (1) et un consommateur (3), le système de matière étant trié du circuit principal avec un premier filtre ou un premier groupe de triage (35), qui est sélectionné à partir d'un groupe qui présente des classificateurs d'impression, des classificateurs de plan, des nettoyeurs, des tamis, des épurateurs tourbillonnaires, des épaississeurs ainsi que des extrudeuses à trou ou des boudineuses, en amont du consommateur (3) en une pâte acceptée et un rejet ;
- retour du système de matière non consommé du consommateur (3) dans le récipient de travail (1) ;
- réintroduction du rejet (38) du premier filtre ou du premier groupe de triage (35) dans le récipient de travail (1) ;
- prélèvement et transport d'un débit volumétrique prescrit du système de matière du récipient de travail (1) dans un circuit secondaire ;
- triage du système de matière en une pâte acceptée et un rejet du circuit secondaire avec un second filtre ou un second groupe de triage (34), qui est sélectionné à partir d'un groupe qui présente des classificateurs d'impression, des classificateurs de plan, des nettoyeurs, des tamis, des épurateurs tourbillonnaires, des épaississeurs ainsi que des extrudeuses à trou ou des boudineuses ;
- retour (36) de la pâte acceptée provenant du second filtre ou du second groupe de triage (34) dans le récipient de travail (1) et évacuation et/ou rebut du rejet (40) provenant du second filtre ou du second groupe de triage (34).

8. Procédé selon la revendication 7, **caractérisé en ce que**
du rejet est ôté continuellement du premier filtre ou du premier groupe de triage (35) et **en ce que** la quantité de celui-ci est située à entre 1 et 50 %, de préférence à entre 5 et 15 % et notamment d'un débit global.

9. Procédé selon les revendications 7 ou 8, **caractérisé en ce que**
via le circuit secondaire, un volume préconisé d'entre 0,1 à 50 %, de préférence de 0,5 à 5 % et notamment de 1 à 3 % d'un débit global d'un bain d'amidon ou d'une coucheuse du circuit principal est dérivé en continu au réservoir de travail (1) et introduit dans le second filtre ou le second groupe de triage (34).

10. Dispositif selon une quelconque des revendications 7 à 9, **caractérisé en ce que**
l'introduction de la pâte acceptée vers le consommateur (3) est réalisée en excès et **en ce que** l'excès de pâte acceptée non consommée est réintroduit vers le récipient de travail (1).

11. Procédé selon la revendication 10, **caractérisé en ce que**
la pâte acceptée réintroduite est nettoyée avant l'introduction dans le récipient de travail (1), notamment filtrée et/ou tamisée (32).

12. Dispositif selon une quelconque des revendications 7 à 11, **caractérisé en ce que**
le triage du système de matière à écoulement libre s'effectue sous exclusion d'air en une pâte acceptée et un rejet.

13. Dispositif selon une quelconque des revendications 7 à 12, **caractérisé en ce que**
le système de matière à écoulement libre est sélectionné à partir d'un groupe qui présente des bains d'amidon, des coucheuses, des suspensions aqueuses, des dispersions aqueuses, des eaux usées, des suspensions de fibres, des combinaisons de ceux-ci.

14. Dispositif selon une quelconque des revendications 1 à 6 en vue de l'exécution d'un procédé selon une quelconque des revendications 7 à 13.

15. Utilisation d'un dispositif selon une quelconque des revendications 1 à 6 en vue du filtrage, de la classification, du tri et/ou de l'évacuation de matières à écoulement libre, notamment de bain d'amidon ou de coucheuse et de manière particulièrement favorisée en vue du triage de matières selon leur forme géométrique, selon des caractéristiques physiques et/ou des différences de phases.
